# EUROPÄISCHE PATENTSCHRIFT

(11) **EP 3 501 088 B1**
(45) Veröffentlichungstag und Bekanntmachung des Hinweises auf die Patenterteilung: **05.08.2020**
(21) Anmeldenummer: 17730783.2
(22) Anmeldetag: 16.06.2017
(51) Int. Cl.: H02K 1/28, H02K 5/167, H02K 5/128, H02K 1/27, H02K 1/18, H02K 7/14, H02K 7/08, H02K 5/15

(54) **FÖRDERAGGREGAT**
SUPPLY UNIT
GROUPE D'ALIMENTATION

(30) Priorität: 18.08.2016 DE 102016215469; 23.11.2016 DE 102016223219
(43) Veröffentlichungstag der Anmeldung: 26.06.2019
(73) Patentinhaber: Robert Bosch GmbH, 70442 Stuttgart (DE)
(72) Erfinder: ZHOU, Chen, 71726 Benningen am Neckar (DE); THIBAULT, David Paul, 71686 Remseck (DE); HILLER, Martin, 71083 Herrenberg (DE); AMESOEDER, Dieter, 71640 Ludwigsburg (DE); FRAHAMMER, Thomas, 72631 Aichtal (DE); KACMAR, Marian, 73760 Ostfildern (DE); ROCKER, Dominik, 71665 Vaihingen/Enz (DE); HAMADA, Raed, 70839 Gerlingen (DE); STOEBERL, Thorsten, 71642 Ludwigsburg-Hoheneck (DE); ZHU, Yihao, 70469 Stuttgart (DE); ENGELHARDT, Joerg, 71254 Ditzingen / Hirschlanden (DE)
(86) Internationale Anmeldenummer: PCT/EP2017/064808
(87) Internationale Veröffentlichungsnummer: WO 2018/033275

(56) Entgegenhaltungen:
- EP-A1- 2 336 565
- WO-A1-2013/091098
- WO-A2-2011/078696
- DE-A1-102014 209 140

## Beschreibung

### Stand der Technik

Die Erfindung geht aus von einem Förderaggregat nach der Gattung des Hauptanspruchs.

Es ist schon ein Förderaggregat aus der DE102014209140 A1 bekannt, mit einer Antriebswelle und einem von der Antriebswelle angetriebenen, in einem Pumpenstator drehbar angeordneten Rotor. Die Antriebswelle weist eine mit dem Rotor zusammenwirkende schiefe Gleitebene auf, die den Rotor mit seiner Rotorachse um eine Antriebsachse der Antriebswelle taumeln lässt. Der Rotor hat an seiner der Antriebswelle abgewandten Stirnseite eine Verzahnung, die mit einer an dem Pumpenstator ausgebildeten Verzahnung kämmt. Zwischen der Verzahnung des Rotors und der Verzahnung des Pumpenstators sind Arbeitsräume zum Fördern von Fördermedien gebildet. Weiterhin sind Magnete vorgesehen, mittels denen die Antriebswelle im Zusammenwirken mit einem Magnetfeld einer elektrischen Wicklung eines Stators antreibbar ist. Die Magnete sind in der Antriebswelle integriert. Dies erfordert, wenn der Durchmesser der Antriebswelle nicht vergrößert werden soll, die Verwendung von sehr teuren Permanentmagneten mit hoher magnetischer Energiedichte, insbesondere Seltenerdmagnete. Diese Magnete sind jedoch nicht beständig gegenüber einer wässrigen Harnstofflösung, so dass eine derartige Ausführung des Förderaggregates für eine Harnstofflösung-Anwendung nicht geeignet ist.

Ein Förderaggregat mit einem Verdrängerverdichter nach der Präambel des unabhängigen Anspruchs 1 ist aus der WO2013091098 A1 bekannt.

### Vorteile der Erfindung

Das erfindungsgemäße Förderaggregat mit den kennzeichnenden Merkmalen des Hauptanspruchs hat demgegenüber den Vorteil, dass kostengünstigere Magnete mit ausreichender Beständigkeit gegenüber einer wässrigen Harnstofflösung verwendbar sind, ohne dass der Durchmesser der Antriebswelle vergrößert werden muss. Die Magnete mit ausreichender Beständigkeit gegenüber der wässrigen Harnstofflösung weisen zwar eine deutlich geringere magnetische Energiedichte auf, sind jedoch auch kostengünstiger, so dass die Herstellungskosten des Förderaggregates verringert werden. Erfindungsgemäß werden diese Vorteile erreicht, indem die Magnete an einem um die Antriebsachse drehbar gelagerten Magnetträger vorgesehen sind, der die Antriebswelle ringförmig umgibt und mit der Antriebswelle mechanisch verbunden ist. Um eine vergleichbare Antriebsleistung des Elektromotors wie im Stand der Technik zu erreichen, wird mehr Magnetmaterial und damit ein größerer Bauraum für die Magnete benötigt. Dieser größere Bauraum wird durch den erfindungsgemäßen separaten Magnetträger bereitgestellt.

Durch die in den Unteransprüchen aufgeführten Maßnahmen sind vorteilhafte Weiterbildungen und Verbesserungen des im Hauptanspruch angegebenen Förderaggregates möglich.

Besonders vorteilhaft ist, wenn die Antriebswelle formschlüssig, insbesondere über eine Verzahnung, mit dem Magnetträger verbunden ist, da auf diese Weise eine mechanische Drehkopplung zwischen der Antriebswelle und dem Magnetträger erreicht wird.

Nach einem vorteilhaften Ausführungsbeispiel wird der Formschluss dadurch erreicht, dass der Magnetträger eine Durchgangsöffnung zum Aufnehmen eines Abschnitts der Antriebswelle aufweist, wobei in der Durchgangsöffnung eine Verzahnung ausgebildet ist, die mit einer Verzahnung der Antriebswelle mechanisch zusammenwirkt.

Sehr vorteilhaft ist es, wenn die Antriebswelle in axialer Richtung bezüglich der Antriebsachse gegenüber dem Magnetträger verschiebbar ist, da auf diese Weise eine axiale Entkopplung bezüglich der Antriebsachse zwischen dem Magnetträger und der Antriebswelle erreicht wird. Das Förderaggregat wird derart eingebaut, dass die Antriebsachse senkrecht steht und die Gewichtskraft der Antriebswelle in axialer Richtung über die schiefe Gleitebene auf den Rotor wirkt. Durch die axiale Entkopplung von Antriebswelle und Magnetträger wirkt das Gewicht des Magnetträgers nicht auf den Rotor, sondern wird über eine Stützscheibe am Gehäuse abgestützt. Dadurch wird der mechanische Verschleiß zwischen der schiefen Gleitebene der Antriebswelle und dem Rotor und sowie an den Verzahnungen von Rotor und Pumpenstator verringert. Auch vorteilhaft ist, wenn der Magnetträger in einem Gehäuse des Förderaggregates angeordnet ist und von dem die elektrische Wicklung tragenden Stator umgeben ist, da auf diese Weise in Elektromotor-Antrieb gebildet wird.

Des Weiteren vorteilhaft ist, wenn die Antriebswelle in einer Lagerhülse drehbar gelagert ist. Auf diese Weise wird eine sehr bauraumsparende Lagerung erreicht.

Darüber hinaus vorteilhaft ist, wenn an einer Stirnseite des Magnetträgers ein Lagerring befestigt ist, der einen Hülsenabschnitt und einen in radialer Richtung auskragenden Scheibenabschnitt aufweist, wobei der Hülsenabschnitt drehbar auf der Lagerhülse gelagert ist und der Scheibenabschnitt mit einer am Gehäuse befestigten Stützscheibe ein axiales Gleitlager bildet. Auf diese Weise wird eine kostengünstige Lagerung des Magnetträgers bereitgestellt.

Vorteilhaft ist, wenn in einem Kanal der Antriebswelle eine Feder vorgesehen ist, die an einem Ende von einem an dem Gehäuse befestigten und in den Kanal hineinragenden Lagerstift vorgespannt ist und mit dem anderen Ende die Antriebswelle gegen den Rotor drückt. Auf diese Weise wird ein Abheben der Antriebswelle von dem Rotor für beide Drehrichtungen der Antriebswelle verhindert, so dass auch eine Rückförderung mit dem Förderaggregat möglich ist. Die schiefe Gleitebene der Antriebswelle erreicht im Zusammenwirken mit dem Rotor nur für eine Drehrichtung einen Druckausgleich, so dass bei einer Förderung entgegen dieser Drehrichtung eine Gegenkraft auf die Antriebswelle erforderlich ist, die durch die Feder bereitgestellt wird.

Weiter vorteilhaft ist, wenn der Magnetträger Kunststoff umfasst, der die Magnete zumindest teilweise umschließt. Auf diese Weise werden die Magnete in dem Kunststoff des Magnetträgers gehalten.

### Zeichnung

Ein Ausführungsbeispiel der Erfindung ist in der Zeichnung vereinfacht dargestellt und in der nachfolgenden Beschreibung näher erläutert.
- Fig.1: zeigt eine Schnittansicht eines erfindungsgemäßen Förderaggregates,
- Fig.2: eine dreidimensionale Schnittansicht des Magnetträgers und der Antriebswelle nach Fig.1,
- Fig.3: eine Teilansicht gemäß Fig.2 und
- Fig.4: eine Explosionsdarstellung des Förderaggregates nach Fig.1.

### Beschreibung des Ausführungsbeispiels

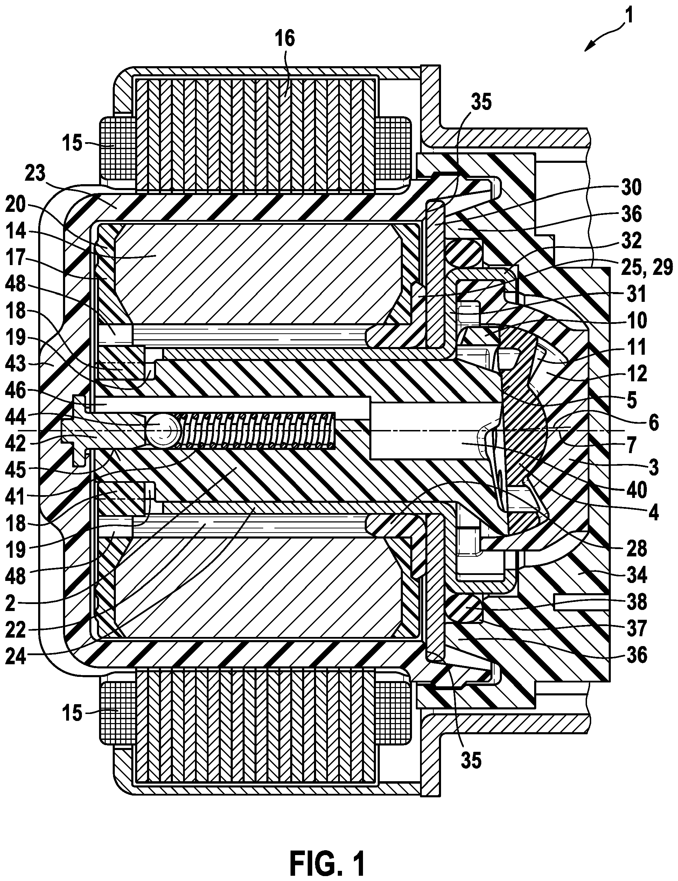

Fig.1 zeigt eine Schnittansicht eines erfindungsgemäßen Förderaggregates. Das erfindungsgemäße Förderaggregat dient dem Fördern von fluiden Fördermedien. Das Förderaggregat 1 umfasst eine Antriebswelle 2 und einen von der Antriebswelle 2 angetriebenen Rotor 4. Weiterhin sind Magnete 14 vorgesehen, mittels denen die Antriebswelle 2 im Zusammenwirken mit einem Magnetfeld einer elektrischen Wicklung 15 eines Stators 16 antreibbar ist. Der Stator 16 ist beispielsweise als Statorblechpaket ausgeführt.

Erfindungsgemäß sind die Magnete 14 an einem um eine Antriebsachse 7 der Antriebswelle 2 drehbar gelagerten Magnetträger 17 vorgesehen, der die Antriebswelle 2 ringförmig umgibt und mit der Antriebswelle 2 mechanisch verbunden ist. Der Magnetträger 17 ist formschlüssig, über eine Verzahnung 18,19 mit der Antriebswelle 2 verbunden. Der Magnetträger 17 weist eine Durchgangsöffnung 22 zum Aufnehmen eines Abschnitts der Antriebswelle 2 auf. In der Durchgangsöffnung 22 ist die Verzahnung 18 ausgebildet ist, die mit der Verzahnung 19 der Antriebswelle 2 mechanisch zusammenwirkt. Die Verzahnung 18,19 ist als Geradverzahnung ausgebildet, beispielsweise als Evolventenverzahnung oder Kreisbogenverzahnung. Dadurch ist die Antriebswelle 2 in axialer Richtung bezüglich der Antriebsachse 7 gegenüber dem Magnetträger 17 verschiebbar, so dass das Gewicht der Magnete 14 bei Ausrichtung der Antriebsachse 7 in Richtung der Schwerkraft über die Stützscheibe 30 am Gehäuse des Förderaggregates 1 abgestützt ist und nicht über die Antriebswelle 2 auf den Rotor 4 wirkt. Der Magnetträger 17 weist beispielsweise einen die Magnete 14 haltenden Magnetträgerabschnitt 20 auf, der aus Kunststoff hergestellt ist und die Magnete 14 in radialer Richtung an der der Antriebswelle 2 zugewandten Innenseite, in Umfangsrichtung zwischen den Magneten 14 und in axialer Richtung an den Stirnseiten umschließt. Die Magnete 14 sind beispielsweise aus Ferritmaterial hergestellt.

Der hohlzylinderförmige Magnetträger 17 ist von dem Stator 16 umgeben und in einem ersten, beispielsweise topfförmigen Gehäuseabschnitt 23 angeordnet. Der Stator 16 ist beispielsweise am Außenumfang des ersten Gehäuseabschnitts 23 vorgesehen.

Zur Lagerung der Antriebswelle 2 ist eine Lagerhülse 24 vorgesehen, die in die Durchgangsöffnung 22 des Magnetträgers 17 hineinreicht und in der die Antriebswelle 2 drehbar gelagert ist. Die Lagerhülse 24 ist beispielsweise aus einem Edelstahl hergestellt. Die Antriebswelle 2 steht in axialer Richtung bezüglich der Antriebsachse 7 mit dem Schulterabschnitt 10 aus der Lagerhülse 24 heraus.
Zur Lagerung des Magnetträgers 17 ist an einer Stirnseite des Magnetträgers 17 ein Lagerring 25 befestigt, der einen Hülsenabschnitt 28 und einen in radialer Richtung bezüglich der Antriebsachse 7 auskragenden Scheibenabschnitt 29 aufweist. Der Hülsenabschnitt 28 des Lagerrings 25 ist drehbar auf der Lagerhülse 24 gelagert. Der Scheibenabschnitt 29 des Lagerrings 25 bildet mit einer am Gehäuseabschnitt 23 anliegenden Stützscheibe 30 ein axiales Gleitlager. Die Stützscheibe 30 ist beispielsweise aus Edelstahl und der Lagerring 25 aus hochtemperaturbeständigem thermoplastischen Kunststoff, insbesondere PEEK, hergestellt.

Der Rotor 4 in beispielsweise einem Pumpenstator 3 drehbar angeordnet und hat an seiner der Antriebswelle 2 abgewandten Stirnseite eine Verzahnung 11, die beispielsweise mit einer an dem Pumpenstator 3 ausgebildeten Verzahnung 12 kämmt, wobei zwischen der Verzahnung 11 des Rotors 4 und der Verzahnung 12 des Pumpenstators 3 Arbeitsräume zur Förderung des Fördermediums gebildet sind. Die Antriebswelle 2 kann eine mit dem Rotor 4 zusammenwirkende schiefe Gleitebene 5 aufweisen, die den Rotor 4 mit seiner Rotorachse 6 um die Antriebsachse 7 der Antriebswelle 2 taumeln lässt. Die schiefe Gleitebene 5 ist beispielsweise an einer Stirnseite eines Schulterabschnittes 10 der Antriebswelle 2 vorgesehen. Die Antriebswelle 2, der Pumpenstator 3 und der Rotor 4 sind beispielsweise aus einem Kunststoff, insbesondere einem Duroplast, hergestellt.

Die Lagerhülse 24 weist an ihrem dem Rotor 4 zugewandten Ende eine Schulter 31 auf, die an der Stützscheibe 30 anliegt und an der ein beispielsweise zylinderförmiger Aufnahmeabschnitt 32 zur Aufnahme des Pumpenstators 3 vorgesehen ist.
Weiterhin ist ein zweiter, beispielsweise deckelförmiger Gehäuseabschnitt 34 vorgesehen, der den ersten Gehäuseabschnitt 23 verschließt, die Stützscheibe 30 mit zumindest einem Halteabschnitt 36 gegen einen Absatz 35 des ersten Gehäuseabschnitts 23 und den Pumpenstator 3 gegen die Schulter 31 der Lagerhülse 24 drückt. Der erste Gehäuseabschnitt 23 und der zweite Gehäuseabschnitt 34 bilden gemeinsam ein Gehäuse des Förderaggregates 1.

Der zweite Gehäuseabschnitt 34 schließt zusammen mit dem Stützscheibe 30 und dem Aufnahmeabschnitt 32 der Lagerhülse 24 einen ringförmigen Raum 37 ein, in dem ein beispielsweise ringförmiges Dichtelement 38 angeordnet ist.

In der Antriebswelle 2 ist ein Kanal 40 ausgebildet, in dem eine Feder 41 vorgesehen ist, die an ihrem einen Ende von einem in den Kanal 40 hineinragenden Lagerstift 42 vorgespannt ist und mit ihrem anderen Ende die Antriebswelle 2 gegen den Rotor 4 drückt. Der Lagerstift 42 ist beispielsweise an einem Boden 43 des topfförmigen ersten Gehäuseabschnitts 23 befestigt. Zwischen der Feder, die beispielsweise eine Schraubenfeder ist, und dem Lagerstift 42 kann eine Kugel 44 vorgesehen sein, die die mit der Feder 41 und der Antriebswelle 2 dreht und ein verschleißarme Verbindung zum Lagerstift 42 darstellt.

Der Kanal 40 ist beispielsweise ein in axialer Richtung verlaufender Durchgangskanal, der von einer dem Rotor 4 abgewandten Stirnseite zu der dem Rotor 4 zugewandten Stirnseite mit der schiefen Gleitebene 5 verläuft und Fluid saugseitig zu den Arbeitskammern hinleitet oder druckseitig abführt.

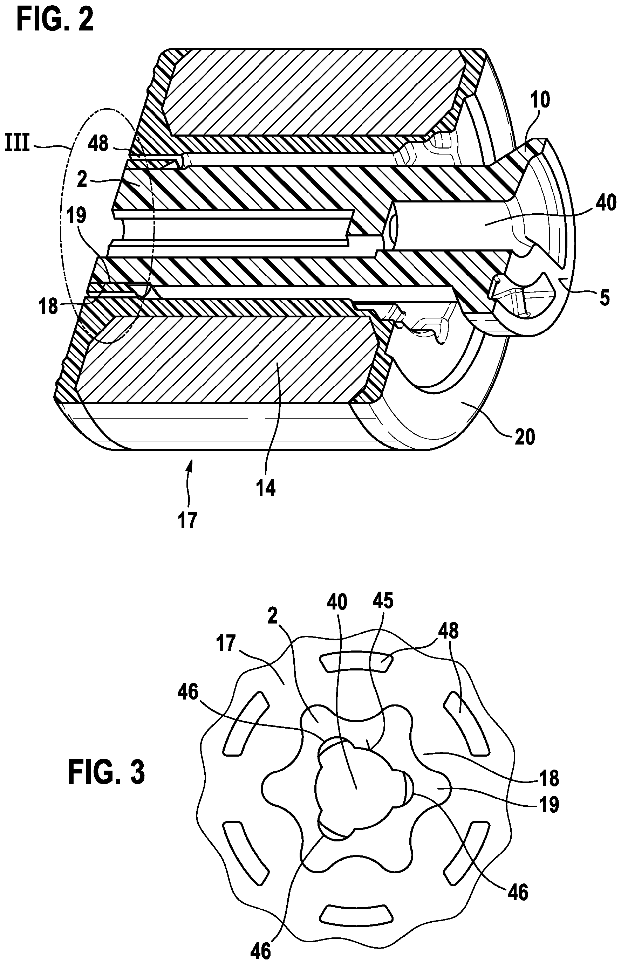

Fig.2 eine dreidimensionale Schnittansicht des Magnetträgers und der Antriebswelle nach Fig.1
Bei der Ansicht nach Fig.2 sind die gegenüber der Ansicht nach Fig.1 gleichbleibenden oder gleichwirkenden Teile durch die gleichen Bezugszeichen gekennzeichnet.

Fig.3 zeigt eine Teilansicht gemäß Fig.2.

Radial innerhalb der Verzahnung 19 der Antriebswelle 2 ist der Ausgang des Kanals 40 vorgesehen, der eine mittlere Aufnahme 45 für den Lagerstift 42 und um die Aufnahme 45 herum beispielsweise drei Ausgangsöffnungen 46 umfasst. Radial außerhalb der Verzahnung 18 sind am Magnetträger 17 zumindest eine, beispielsweise 6 stirnseitige Schmieröffnungen 48 zur Schmierung der Lagerhülse 24 vorgesehen, die das Fluid aus dem Kanal 40 in den Spalt zwischen der Lagerhülse 24 und der Antriebswelle 2 strömen lassen.

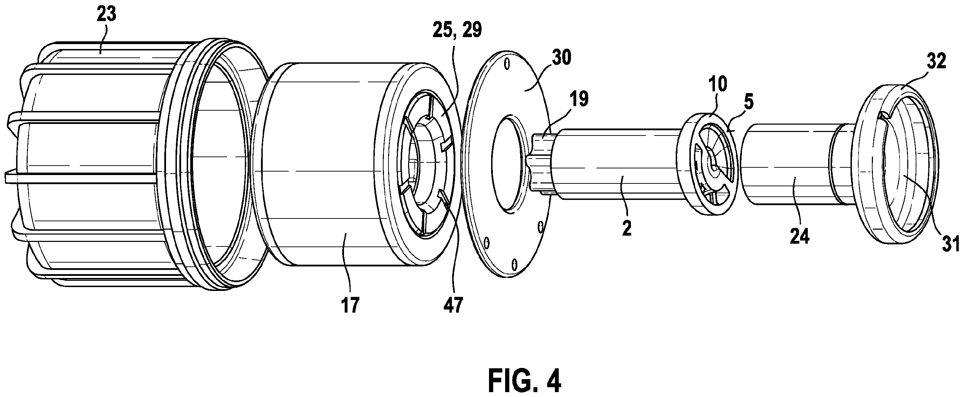

Fig.4 zeigt eine Explosionsdarstellung des Förderaggregates nach Fig.1.

Der Lagerring 25 kann an seinem Scheibenabschnitt 29 Hydrotaschen 47 zur hydrodynamischen Gleitlagerung des Magnetträgers 17 aufweisen.

## Patentansprüche

1. Förderaggregat (1) mit einer um eine Antriebsachse (7) drehbaren Antriebswelle (2) und einem von der Antriebswelle (2) angetriebenen Rotor (4), wobei Magnete (14) vorgesehen sind, mittels denen die Antriebswelle (2) im Zusammenwirken mit einem Magnetfeld einer elektrischen Wicklung (15) eines Stators (16) antreibbar ist, wobei die Magnete (14) an einem um die Antriebsachse (7) drehbar gelagerten Magnetträger (17) vorgesehen sind, der die Antriebswelle (2) ringförmig umgibt und mit der Antriebswelle (2) mechanisch verbunden ist, wobei die Antriebswelle (2) formschlüssig, insbesondere über eine Verzahnung (18,19), mit dem Magnetträger (17) verbunden ist und in axialer Richtung bezüglich der Antriebsachse (7) gegenüber dem Magnetträger (17) verschiebbar ist,
**dadurch gekennzeichnet, dass**
die Antriebswelle (2) in einer Lagerhülse (24) drehbar gelagert ist und dass an einer Stirnseite des Magnetträgers (17) ein Lagerring (25) befestigt ist, der einen Hülsenabschnitt (28) und einen in radialer Richtung auskragenden Scheibenabschnitt (29) aufweist, wobei der Hülsenabschnitt (28) drehbar auf der Lagerhülse (24) gelagert ist und der Scheibenabschnitt (29) mit einer an einem Gehäuse (23,34) des Förderaggregats (1) befestigten, an einer Schulter (31) der Lagerhülse (24) anliegenden Stützscheibe (30) ein axiales Gleitlager bildet.

2. Förderaggregat nach Anspruch 1, **dadurch gekennzeichnet, dass** der Magnetträger (17) eine Durchgangsöffnung (22) zum Aufnehmen eines Abschnitts der Antriebswelle (2) aufweist, wobei in der Durchgangsöffnung (22) die Verzahnung (18) ausgebildet ist, die mit der Verzahnung (19) der Antriebswelle (2) mechanisch zusammenwirkt.

3. Förderaggregat nach einem der vorhergehenden Ansprüche, **dadurch gekennzeichnet, dass** der Magnetträger (17) von dem die elektrische Wicklung (15) tragenden Stator (16) umgeben ist.

4. Förderaggregat nach einem der vorhergehenden Ansprüche, **dadurch gekennzeichnet, dass** der Magnetträger (17) in einem ersten Gehäuseabschnitt (23) angeordnet ist.

5. Förderaggregat nach einem der vorhergehenden Ansprüche, **dadurch gekennzeichnet, dass** in einem Kanal (40) der Antriebswelle (2) eine Feder (41) vorgesehen ist, die an einem Ende von einem in den Kanal (40) hineinragenden Lagerstift (42) vorgespannt ist und mit dem anderen Ende die Antriebswelle (2) gegen den Rotor (4) drückt.

6. Förderaggregat nach einem der vorhergehenden Ansprüche, **dadurch gekennzeichnet, dass** der Magnetträger Kunststoff umfasst, der die Magnete zumindest teilweise umschließt.

7. Förderaggregat nach einem der vorhergehenden Ansprüche, **dadurch gekennzeichnet, dass** der Rotor (4) in einem Pumpenstator (3) angeordnet ist
und die Antriebswelle (2) eine mit dem Rotor (4) zusammenwirkende schiefe Gleitebene (5) aufweist, die den Rotor (4) mit seiner Rotorachse (6) um die Antriebsachse (7) der Antriebswelle (2) taumeln lässt, wobei der Rotor (4) an seiner der Antriebswelle (2) abgewandten Stirnseite eine Verzahnung (11) aufweist, die mit einer an dem Pumpenstator (3) ausgebildeten Verzahnung (12) kämmt, wobei zwischen der Verzahnung (11) des Rotors (4) und der Verzahnung (12) des Pumpenstators (3) Arbeitsräume gebildet sind.

## Claims

1. Delivery unit (1) having a drive shaft (2) which can be rotated about a drive axis (7) and having a rotor (4) driven by the drive shaft (2), wherein magnets (14) are provided by means of which the drive shaft (2) can be driven in interaction with a magnetic field of an electrical winding (15) of a stator (16), wherein the magnets (14) are provided on a magnet carrier (17) which is mounted so as to be rotatable about the drive axis (7), said magnet carrier annularly surrounding the drive shaft (2) and being mechanically connected to the drive shaft (2), wherein the drive shaft (2) is connected to the magnet carrier (17) in a form-fitting manner, in particular via a toothing (18, 19), and is displaceable in relation to the magnet carrier (17) in the axial direction with respect to the drive axis (7),
**characterized in that**
the drive shaft (2) is rotatably mounted in a bearing sleeve (24), and **in that** a bearing ring (25) is fastened to an end side of the magnet carrier (17) and has a sleeve portion (28) and a disc portion (29) which projects in the radial direction, wherein the sleeve portion (28) is rotatably mounted on the bearing sleeve (24), and the disc portion (29) forms, with a support disc (30) fastened to a housing (23, 34) of the delivery unit (1) and bearing against a shoulder (31) of the bearing sleeve (24), an axial sliding bearing.

2. Delivery unit according to Claim 1, **characterized in that** the magnet carrier (17) has a through-opening (22) for receiving a portion of the drive shaft (2), wherein the toothing (18) is formed in the through-opening (22) and mechanically interacts with the toothing (19) of the drive shaft (2).

3. Delivery unit according to either of the preceding claims, **characterized in that** the magnet carrier (17) is surrounded by the stator (16) bearing the electrical winding (15).

4. Delivery unit according to one of the preceding claims, **characterized in that** the magnet carrier (17) is arranged in a first housing portion (23).

5. Delivery unit according to one of the preceding claims, **characterized in that** a spring (41) is provided in a duct (40) of the drive shaft (2), said spring being preloaded at one end by a bearing pin (42) projecting into the duct (40) and pressing the drive shaft (2) against the rotor (4) via the other end.

6. Delivery unit according to one of the preceding claims, **characterized in that** the magnet carrier comprises plastic which at least partially encloses the magnets.

7. Delivery unit according to one of the preceding claims, **characterized in that** the rotor (4) is arranged in a pump stator (3), and the drive shaft (2) has an inclined sliding plane (5) which interacts with the rotor (4) and which allows the rotor (4) with its rotor axis (6) to tumble about the drive axis (7) of the drive shaft (2), wherein the rotor (4) has, on its end side facing away from the drive shaft (2), a toothing (11) which meshes with a toothing (12) formed on the pump stator (3), wherein working spaces are formed between the toothing (11) of the rotor (4) and the toothing (12) of the pump stator (3).

## Revendications

1. Groupe de refoulement (1), comprenant un arbre d'entraînement (2) pouvant tourner autour d'un axe d'entraînement (7) et un rotor (4) entraîné par l'arbre d'entraînement (2), dans lequel des aimants (14) sont prévus qui permettent d'entraîner l'arbre d'entraînement (2) en coopération avec un champ magnétique d'un enroulement électrique (15) d'un stator (16), les aimants (14) étant prévus sur un support d'aimant (17) monté rotatif autour de l'axe d'entraînement (7), entourant l'arbre d'entraînement (2) en forme d'anneau et raccordé mécaniquement à l'arbre d'entraînement (2), dans lequel l'arbre d'entraînement (2) est relié par complémentarité de forme, en particulier par l'intermédiaire d'une denture (18, 19), au support d'aimant (17) et peut être déplacé par rapport au support d'aimant (17) dans la direction axiale par rapport à l'axe d'entraînement (7),
**caractérisé en ce que** l'arbre d'entraînement (2) est monté rotatif dans une douille de palier (24), et **en ce que** sur une face frontale du support d'aimant (17) est fixée une bague de palier (25) qui présente une portion de douille (28) et une portion de disque (29) faisant saillie dans la direction radiale, dans lequel la portion de douille (28) est montée rotative sur la douille de palier (24) et la portion de disque (29) forme un palier lisse axial avec un disque d'appui (30) adjacent à un épaulement (31) de la douille de palier et fixé à un carter (23, 24) du groupe de refoulement (1).

2. Groupe de refoulement selon la revendication 1, **caractérisé en ce que** le support d'aimant (17) présente une ouverture traversante (22) pour recevoir une portion de l'arbre d'entraînement (2), la denture (18) coopérant mécaniquement avec la denture (19) de l'arbre d'entraînement (2) étant réalisée dans l'ouverture traversante (22).

3. Groupe de refoulement selon l'une quelconque des revendications précédentes, **caractérisé en ce que** le support d'aimant (17) est entouré du stator (16) portant l'enroulement électrique (15).

4. Groupe de refoulement selon l'une quelconque des revendications précédentes, **caractérisé en ce que** le support d'aimant (17) est disposé dans une première portion de carter (23).

5. Groupe de refoulement selon l'une quelconque des revendications précédentes, **caractérisé en ce que** dans un canal (40) de l'arbre d'entraînement (2) est prévu un ressort (41) chargé à une extrémité par une tige de palier (42) faisant saillie dans le canal (40) et poussant l'arbre d'entraînement (2) contre le rotor (4) par l'autre extrémité.

6. Groupe de refoulement selon l'une quelconque des revendications précédentes, **caractérisé en ce que** le support d'aimant contient de la matière plastique entourant les aimants au moins en partie.

7. Groupe de refoulement selon l'une quelconque des revendications précédentes, **caractérisé en ce que** le rotor (4) est disposé dans un stator de pompe (3) et l'arbre d'entraînement (2) présente un plan de glissement incliné (5) coopérant avec le rotor (4) rendant le rotor (4) avec son axe de rotor (6) flottant autour de l'axe d'entraînement (7) de l'arbre d'entraînement (2), dans lequel le rotor (4) présente sur sa face frontale détournée de l'arbre d'entraînement (2) une denture (11) qui s'engrène dans une denture (12) réalisée sur le stator de pompe (3), des espaces utiles étant formés entre la denture (11) du rotor (4) et la denture (12) du stator de pompe (3).
